# EUROPEAN PATENT APPLICATION

(11) **EP 4 844 938 A1**
(43) Date of publication of application: **25.11.2026**
(21) Application number: 26180688.9
(22) Date of filing: 22.05.2026
(51) Int. Cl.: H01M 50/581, B64D 27/357, H01M 50/249, H02J 7/60, H01M 10/42

(54) **THERMAL PROTECTION SYSTEM AND METHOD FOR AN AIRCRAFT BATTERY**

(30) Priority: 22.05.2025 US 202519216296
(71) Applicant: Pratt & Whitney Canada Corp., Longueuil, Québec J4G 1A1 (CA)
(72) Inventor: HANNA, Michael, Beaconsfield (CA)
(74) Representative: Dehns

(57) **Abstract**

An aircraft battery assembly includes a battery, a first thermally-sacrificial wire (100), a contactor (88A), and a controller (96). The battery includes multiple battery strings (74) connected in parallel at a first main battery line, with each string containing a plurality of battery cells. A first battery string (74) includes a subset of these cells. The first thermally-sacrificial wire (100) is disposed at the cells in the first battery string (74). A contactor connects the first battery string (74) to the main battery line and is configurable in open and closed states. The controller forms an electrical circuit with the thermally-sacrificial wire (100) and is operable to detect closed and open circuit conditions. The controller is operably coupled with the contactor and selectively configures it in the open or closed state. Upon detecting an open circuit condition, the controller is operable to configure the contactor in the open state to isolate the battery string.

## Description

### TECHNICAL FIELD

The invention relates generally to aircraft electrical systems including batteries and, more particularly, to thermal protection systems and methods for aircraft batteries.

### BACKGROUND OF THE ART

Propulsion system architectures for aircraft, such as hybrid-electric propulsion systems, may typically include one or more electrical assemblies configured to support various functions of the propulsion system and an associated aircraft. These electrical assemblies may frequently include batteries configured to provide electrical power for various electrical loads of the aircraft and its propulsion system(s). Various systems and methods for controlling and providing protective functions for these batteries are known. While these known systems and methods may be suitable for their intended purposes, there is always room in the art for improvement.

### SUMMARY

According to an aspect of the present invention, an assembly for an aircraft includes a battery, a first thermally-sacrificial wire (e.g., a wire configured to melt or otherwise render an electrically-conductive sacrificial material of the wire substantially unable to conduct electrical power in the event of an overtemperature condition of the battery, e.g., a temperature of the battery above a predetermined threshold), a first contactor, and a first string controller (e.g., according to any of the aspects below). The battery includes a plurality of battery strings configured to be electrically connected together in parallel at a first main battery line. Each of the plurality of battery strings includes a plurality of battery cells electrically connected together. The plurality of battery strings includes a first battery string. The first thermally-sacrificial wire is disposed at the plurality of battery cells. The first contactor is electrically connected between the first battery string and the first main battery line. The first contactor is configurable in an open state and a closed state. The first string controller forms a first electrical circuit with the first thermally-sacrificial wire. The first string controller is operable to detect a closed circuit condition of the first electrical circuit and an open circuit condition of the first electrical circuit. The first string controller is operably coupled with the first contactor. The first string controller is operable to selectively configure the first contactor in the open state or the closed state. The first string controller is further operable to configure the first contactor in the open state in response to detecting the open circuit condition.

In any of the aspects or embodiments described above and herein, the first string controller may be a simple electronic hardware (SEH) controller.

In any of the aspects or embodiments described above and herein, the first battery string may include a plurality of battery substrings electrically connected together to form the first battery string, the plurality of battery substrings may include a first battery substring, and the first battery substring may include the plurality of battery cells.

In any of the aspects or embodiments described above and herein, the assembly may further include a second contactor and a second string controller, the second contactor may be electrically connected between the first battery string and a second main battery line, the second contactor may be configurable in the open state and the closed state, the second string controller may form a second electrical circuit with the first thermally-sacrificial wire, the second string controller may be operable to detect a closed circuit condition of the second electrical circuit and an open circuit condition of the second electrical circuit, the second string controller may be operably coupled with the second contactor, the second string controller may be operable to selectively configure the second contactor in the open state or the closed state, the second string controller may be further operable to configure the second contactor in the open state in response to detecting the open circuit condition of the second electrical circuit.

In any of the aspects or embodiments described above and herein, the first thermally-sacrificial wire may contact each of the plurality of battery cells.

In any of the aspects or embodiments described above and herein, each of the plurality of battery cells may have a perimeter, and the first thermally-sacrificial wire may contact a portion of the perimeter.

In any of the aspects or embodiments described above and herein, each of the plurality of battery cells may have a perimeter, and the first thermally-sacrificial wire may be wound about the perimeter.

In any of the aspects or embodiments described above and herein, the assembly may further include a second thermally-sacrificial wire (e.g., a second wire configured to melt or otherwise render an electrically-conductive sacrificial material of the wire substantially unable to conduct electrical power in the event of an overtemperature condition of the battery, e.g., a temperature of the battery above a second or the first predetermined threshold) disposed at the plurality of battery cells, the first string controller may form a second electrical circuit with the second thermally-sacrificial wire, the first string controller may be operable to detect a closed circuit condition of the second electrical circuit and an open circuit condition of the second electrical circuit, the first string controller may be operable to selectively configure the first contactor in the open state or the closed state, the first string controller may be further operable to configure the first contactor in the open state in response to detecting the open circuit condition of the second electrical circuit.

In any of the aspects or embodiments described above and herein, each of the first thermally-sacrificial wire and the second thermally-sacrificial wire may contact each of the plurality of battery cells.

In any of the aspects or embodiments described above and herein, the assembly may further include a cockpit control system connected in signal communication with the first string controller, and the first string controller may be configured to generate and transmit a warning signal to the cockpit control system in response to the detecting the open circuit condition.

In any of the aspects or embodiments described above and herein, the assembly may further include a propulsor, an electric motor, and an electrical distribution system, the electric motor may be coupled with the propulsor, and the electrical distribution system may be configured to electrically interconnect the electric motor with the battery.

In any of the aspects or embodiments described above and herein, the first thermally-sacrificial wire may include an electrically-conductive sacrificial material, and the electrically-conductive sacrificial material may be a eutectic metal or metal alloy.

According to another aspect of the present invention, a thermal protection method for an aircraft battery includes forming an electrical circuit with a thermally-sacrificial wire (e.g., a wire configured to melt or otherwise render an electrically-conductive sacrificial material of the wire substantially unable to conduct electrical power in the event of an overtemperature condition of the battery, e.g., a temperature of the battery above a predetermined threshold) and a string controller. The thermally-sacrificial wire is disposed at a plurality of battery cells of a battery. The battery includes a plurality of battery strings including a first battery string. The first battery string includes the plurality of battery cells. The thermal protection method further includes electrically connecting the first battery string to a main battery line with a contactor in a closed state. The contactor is configurable in the closed state or an open state. The thermal protection method further includes detecting one of a closed circuit condition or an open circuit condition of the electrical circuit with the string controller. The string controller is operable to configure the contactor in the open state in response to detecting the open circuit condition.

In any of the aspects or embodiments described above and herein, the thermal protection method may further include configuring the contactor in the open state, with the string controller, in response to detecting the open circuit condition.

According to another aspect of the present invention, an assembly for an aircraft includes a battery, a first thermally-sacrificial wire (e.g., a wire configured to melt or otherwise render an electrically-conductive sacrificial material of the wire substantially unable to conduct electrical power in the event of an overtemperature condition of the battery, e.g., a temperature of the battery above a predetermined threshold), a first contactor, and a first string controller. The battery includes a plurality of battery cells electrically connected together. The first thermally-sacrificial wire is disposed at the plurality of battery cells. The first thermally-sacrificial wire may include an electrically-conductive sacrificial material. The electrically-conductive sacrificial material may be a eutectic metal or metal alloy. The first contactor is electrically connected between the plurality of battery cells and a main battery line. The first contactor is configurable in an open state and a closed state. The first string controller forms a first electrical circuit with the first thermally-sacrificial wire. The first string controller is operable to detect a closed circuit condition of the first electrical circuit and an open circuit condition of the first electrical circuit. The first string controller is operably coupled with the first contactor. The first string controller is operable to selectively configure the first contactor in the open state or the closed state. The first string controller is further operable to configure the first contactor in the open state in response to detecting the open circuit condition.

According to another aspect of the present invention, an assembly for an aircraft includes a battery, a first thermally-sacrificial wire (e.g., a wire configured to melt or otherwise render an electrically-conductive sacrificial material of the wire substantially unable to conduct electrical power in the event of an overtemperature condition of the battery, e.g., a temperature of the battery above a predetermined threshold), a first contactor, and a first string controller. The battery includes a plurality of battery cells electrically connected together. The first thermally-sacrificial wire is disposed at the plurality of battery cells. The first thermally-sacrificial wire includes an electrically-conductive sacrificial material. The electrically-conductive sacrificial material is a eutectic metal or metal alloy. The first contactor is electrically connected between the plurality of battery cells and a main battery line. The first contactor is configurable in an open state and a closed state. The first string controller forms a first electrical circuit with the first thermally-sacrificial wire. The first string controller is operable to detect a closed circuit condition of the first electrical circuit and an open circuit condition of the first electrical circuit. The first string controller is operably coupled with the first contactor. The first string controller is operable to selectively configure the first contactor in the open state or the closed state. The first string controller is further operable to configure the first contactor in the open state in response to detecting the open circuit condition.

In any of the aspects or embodiments described above and herein, the first string controller may be a simple electronic hardware (SEH) controller.

In any of the aspects or embodiments described above and herein, the assembly may further include a second thermally-sacrificial wire disposed at the plurality of battery cells. The first string controller forms a second electrical circuit with the second thermally-sacrificial wire. The first string controller is operable to detect a closed circuit condition of the second electrical circuit and an open circuit condition of the second electrical circuit. The first string controller is operable to selectively configure the first contactor in the open state or the closed state. The first string controller is further operable to configure the first contactor in the open state in response to detecting the open circuit condition of the second electrical circuit.

In any of the aspects or embodiments described above and herein, the first thermally-sacrificial wire may contact each of the plurality of battery cells.

In any of the aspects or embodiments described above and herein, each of the plurality of battery cells may have a perimeter, and the first thermally-sacrificial wire may contact a portion of the perimeter.

In any of the aspects or embodiments described above and herein, each of the plurality of battery cells may have a perimeter, and the first thermally-sacrificial wire may be wound about the perimeter.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

Certain exemplary embodiments will now be described in greater detail by way of example only and with reference to the accompanying drawings in which:
FIG. 1 illustrates an aircraft including a propulsion system.
FIG. 2 schematically illustrates a cutaway, side view of an aircraft propulsion system.
FIG. 3 schematically illustrates an electrical assembly for the aircraft propulsion system, said electrical assembly including a battery.
FIGS. 4A-B schematically illustrates battery strings of the battery.
FIG. 5 schematically illustrates a portion of the battery with thermally-sacrificial wires in a configuration.
FIG. 6 schematically illustrates a portion of the battery with thermally-sacrificial wires in another configuration.

### DETAILED DESCRIPTION

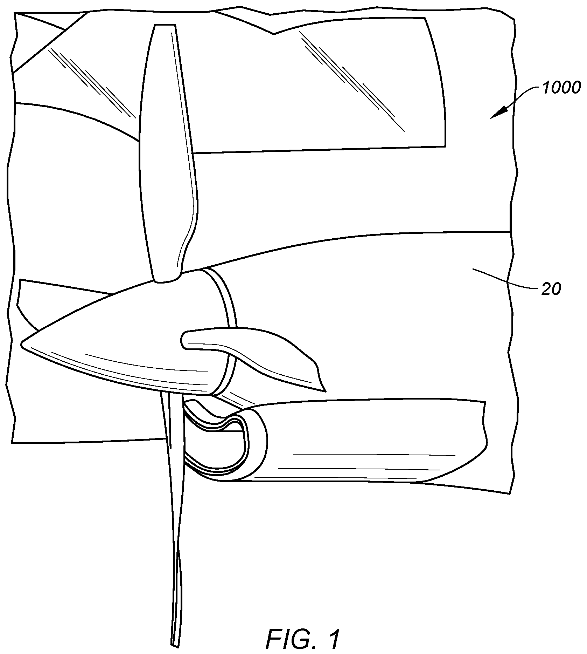

FIG. 1 illustrates an aircraft 1000 including at least one propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

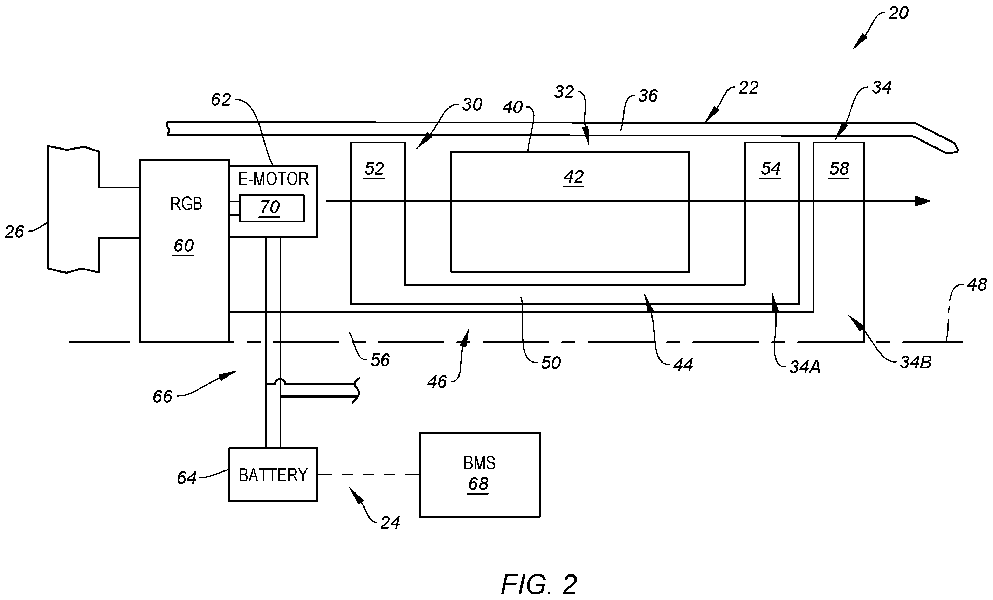

FIG. 2 schematically illustrates a cutaway, side view of the propulsion system 20. The propulsion system 20 of FIG. 2 includes an engine 22, an electrical assembly 24, a propulsor 26, and an engine controller 28. The engine 22 of FIG. 2 is configured as a turboprop gas turbine engine. However, the present disclosure is not limited to any particular configuration of gas turbine engine for the propulsion system 20, and examples of gas turbine engine configurations for the propulsion system 20 may include, but are not limited to, a turbofan engine, a turbojet engine, a propfan engine, or the like. Aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). Aspects of the present disclosure may also be equally applicable to aircraft engines which are not part of a propulsion system, for example, an engine for an auxiliary power unit (APU).

The engine 22 of FIG. 2 includes a compressor section 30, a combustor section 32, a turbine section 34, and an engine static structure 36. The combustor section 32 includes a combustor 40 (e.g., an annular combustor). The combustor 40 forms a combustion chamber 42. The turbine section 34 includes a high-pressure turbine section 34A and a power turbine section 34B.

Components of the compressor section 30 and the turbine section 34 of FIG. 2 form a first rotational assembly 44 (e.g., a high-pressure spool) and a second rotational assembly 46 of the engine 22. The first rotational assembly 44 and the second rotational assembly 46 are mounted for rotation about a rotational axis 48 (e.g., an axial centerline) of the engine 22 relative to the engine static structure 36.

The first rotational assembly 44 includes a first shaft 50, a bladed compressor rotor 52 for the compressor section 30, and a bladed first turbine rotor 54 for the high-pressure turbine section 34A. The first shaft 50 interconnects the bladed compressor rotor 52 and the bladed first turbine rotor 54.

The second rotational assembly 46 of FIG. 2 includes a second shaft 56 and a bladed second turbine rotor 58 for the power turbine section 34B. The second shaft 56 is connected to the bladed second turbine rotor 58. The second shaft 56 operably connects (e.g., directly or indirectly connects) the bladed second turbine rotor 58 with the propulsor 26. For example, the second shaft 56 of FIG. 2 is coupled with the propulsor 26 by a gear box 60 (e.g., a reduction gear box (RGB)). The gear box 60 includes a gear assembly (e.g., an epicyclic gear assembly) coupling the second shaft 56 and the propulsor 26. The gear assembly may be a reduction gear assembly configured to drive rotation of the propulsor 26 at a reduced rotational speed relative to the second shaft 56. Of course, the second shaft 56 may alternatively be directly connected to the propulsor 26 to drive the propulsor 26 at the same rotational speed as the second shaft 56.

The engine static structure 36 includes engine casings, cowlings, and other fixed (e.g., non-rotating) structures of the engine 22 which house and/or support components of the engine 22 such as, but not limited to, those of the compressor section 30, the combustor section 32, and the turbine section 34. The engine static structure 36 includes one or more bearing assemblies and/or gear trains configured to rotationally support and/or interconnect components of the first rotational assembly 44 and the second rotational assembly 46.

The electrical assembly 24 of FIG. 2 includes an electric motor 62, a battery 64, an electrical distribution system 66, and a battery management system (BMS) 68.

The electric motor 62 is electrically connected to the electrical distribution system 66. The electric motor 62 includes a rotor 70. The rotor 70 is coupled to the propulsor 26 by the gear box 60. For example, the gear box 60 may couple both of the second shaft 56 and the rotor 70 to the propulsor 26 to facilitate driving rotation of the propulsor 26 with the bladed second turbine rotor 58 (e.g., via the second shaft 56), the electric motor 62 (e.g., the rotor 70), or a combination of the bladed second turbine rotor 58 and the electric motor 62. The electric motor 62 may additionally include or be electrically connected with to receive power from a motor control unit (e.g., an inverter) configured to control electric power characteristics (e.g., frequency, voltage, current) supplied to the electric motor 62 (e.g., windings of the electric motor 62), for example, to control a rotation speed and/or torque of the rotor 70.

The battery 64 is electrically connected to the electrical distribution system 66. The battery 64 is configured to selectively supply electrical power to the electrical distribution system 66 independently (e.g., as a single power source for the electrical assembly 24) or in combination with one or more other electrical power sources (e.g., an electrical generator). As will be discussed in further detail, the battery 64 may include a plurality of battery strings, battery sub-strings, battery modules, battery cells, and/or the like electrically connected together in series and/or parallel as necessary to configure the battery 64 with the desired electrical characteristics (e.g., voltage output, current output, storage capacity, etc.). The present disclosure is not limited to any particular configuration of the battery 64.

During operation of the propulsion system 20 of FIG. 2, ambient air enters the propulsion system 20 through an air intake into and through a core flow path of the engine 22. The ambient air flow along the core flow path is compressed in the compressor section 30 and directed into the combustor 40. Fuel is injected into the combustor 40 (e.g., the combustion chamber 42) and mixed with the compressed air to provide a fuel-air mixture. This fuel-air mixture is ignited, and combustion products thereof flow through the high-pressure turbine section 34A and the power turbine section 34B and are exhausted from the propulsion system 20. The bladed first turbine rotor 54 and the bladed second turbine rotor 58 rotationally drive the first rotational assembly 44 and the second rotational assembly 46, respectively, in response to the combustion gas flow through the high-pressure turbine section 34A and the power turbine section 34B. The second rotational assembly 46 (e.g., the second shaft 56) may drive rotation of the propulsor 26, for example, through the gear box 60. The electric motor 62 may be selectively operated (e.g., by the engine controller 28) to drive rotation of the propulsor 26 independently or in combination with the engine 22 through the gear box 60.

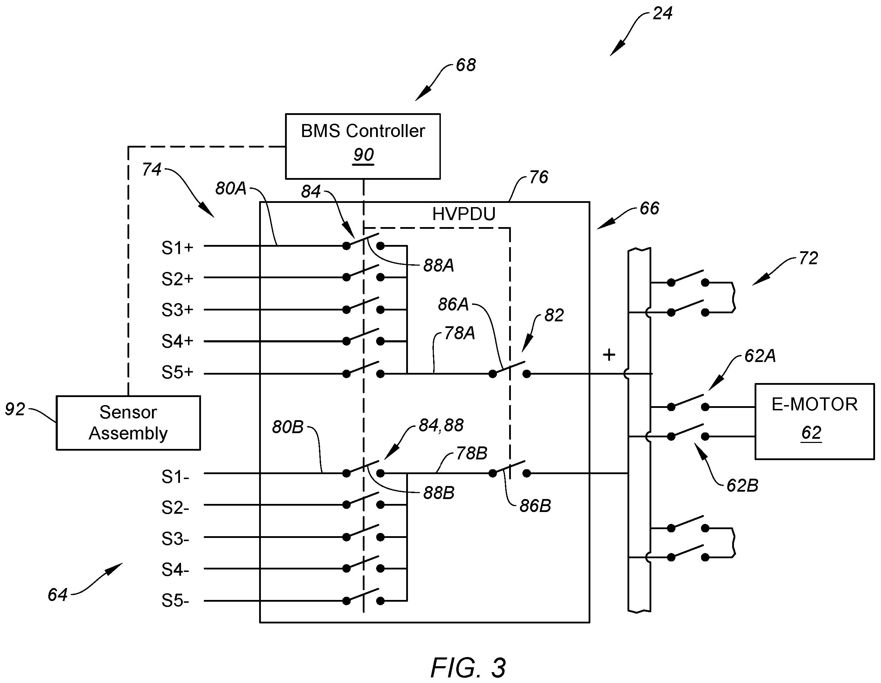

FIG. 3 schematically illustrates a portion of the electrical assembly 24 including the battery 64, the electrical distribution system 66, and the battery management system 68. The electrical assembly 24 is configured to supply electrical power to one or more electrical loads 72 of the propulsion system 20 (see FIG. 2) and/or the aircraft 1000 (see FIG. 1) such as, but not limited to, the electric motor 62. The battery 64 of FIG. 3 includes a plurality of battery strings 74 configured to be electrically connected together in parallel, for example, by the electrical distribution system 66. The battery strings 74 of FIG. 3 include five (5) battery strings 74, S1-5; however, the present disclosure is not limited to any particular quantity of the battery strings 74 of the battery 64.

The electrical distribution system 66 electrically interconnects components of the electrical assembly 24. The electrical distribution system 66 includes switchgear, cables, wires, breakers, switches, contactors, electrical power conditional and/or conversion (e.g., AC to DC or DC to AC conversion) components, and/or other electrical components to effect the transfer of electrical power between components of the electrical assembly 24. For example, the electrical distribution system 66 of FIG. 3 electrically connects the electric motor 62 (and other electrical loads 72) with the battery 64. The electrical distribution system 66 may additionally be electrically connected with other electric power sources (e.g., an electrical generator) of the electrical assembly 24. The electrical distribution system 66 may additionally include one or more electrical power controllers, for example, to control a magnitude and/or direction of electrical current flow to components of the electrical assembly 24. The electrical distribution system 66 is configured to supply electrical power to the electrical loads 72 of the aircraft 1000, the propulsion system 20, and/or the engine 22.

The electrical distribution system 66 of FIG. 3 includes a high-voltage power distribution unit (HVPDU) 76. The HVPDU 76 includes a positive main battery line 78A and a negative main battery line 78B. The HVPDU 76 additionally includes, for each of the battery strings 74, a positive string line 80A and a negative string line 80B. The main battery lines 78A, 78B electrically interconnect the battery strings 74 with the electrical loads 72. The string battery lines 80A, 80B electrically connect each of the battery strings 74 with the main battery lines 78A, 78B. For example, the positive string lines 80A (e.g., S1+, S2+, S3+, S4+, S5+) are electrically connected together at a positive battery line 78A and the negative string lines 80B (e.g., S1-, S2, S3-, S4-, S5-) are electrically connected together at the negative battery line 78B to electrically connect the battery strings 74 in parallel.

The HVPDU 76 further includes a main battery switch assembly 82 for the main battery lines 78A, 78B and a battery string switch assembly 84 for the string lines 80A, 80B of each of the battery strings 74. The main battery switch assembly 82 and the battery string switch assembly 84 of FIG. 3 each include electrical contactors configured to facilitate selective control of electrical current flow through the HVPDU 76, for example, along the main battery lines 78A, 78B and the string lines 80A, 80B. The contactors are selectively configurable (e.g., switchable) in and between a closed state or an open state to conduct or interrupt an electrical current flow, respectively. The contactors may include electrically-controlled relays or switches which may be controlled by an electrical control signal to position the respective contactors in the open state or the closed state. The present disclosure, switch assemblies 82, 84, however, are not limited to electrical contactors and other electrical power interruption devices, breakers, and switches may alternatively be used. The main battery switch assembly 82 and the battery string switch assembly 83 of FIG. 3 include main battery contactors 86A, 86B (collectively the main battery contactors 86) and string contactors 88A, 88B (collectively the string contactors 88) on each of the main battery lines 78A, 78B and the string lines 80A, 80B, respectively.

The battery management system 68 is configured to monitor, control, and facilitate protective functions for the battery 64. The battery management system 68 includes a BMS controller 90. The BMS controller 90 may be connected in electrical (e.g., signal) communication with each of the main battery contactors 86 and/or each of the string contactors 88 to control positions of the contactors 86, 88 in their closed and open positions. The battery management system 68 and its BMS controller 90 are configured to monitor conditions of the battery 64 such as, but not limited to, charging parameters, discharge parameters, state of charge, state of health, temperature, voltage, current, battery faults, arc discharges, and the like, to facilitate operation and control of the electrical assembly 24 and the battery 64. The battery management system 68 includes a battery sensor assembly 92 connected in signal communication with the BMS controller 90. The battery sensor assembly 92 may include temperature sensors, voltage sensors, current sensors, and the like at various locations of the battery 64 to facilitate battery monitoring and protection functions of the BMS controller 90.

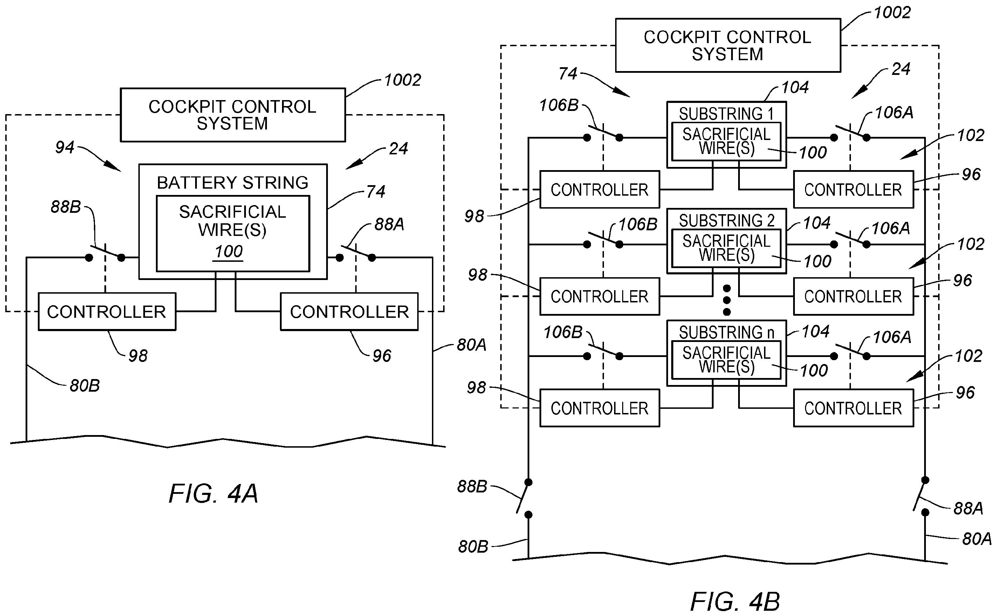

FIG. 4A schematically illustrates a string assembly 94 including one of the battery strings 74. As shown in FIG. 4A, the string assembly 94 may include a first string controller 96, a second string controller 98, and at least one thermally-sacrificial wire 100 of the battery management system 68. The first string controller 96 is operably coupled (e.g., electrically connected) with the first string contactor 88A. The first string controller 96 is operable to selectively configure the first string contactor 88A in its open state or its closed state. The second string controller 98 is operably coupled (e.g., electrically connected) with the second string contactor 88B. The second string controller 98 is operable to selectively configure the second string contactor 88B in its open state or its closed state. The sacrificial wire(s) 100 extend through the respective battery string 74, as will be discussed in further detail. The sacrificial wire(s) 100 (e.g., each) form an electrical circuit with the first string controller 96 and/or the second string controller 98.

As shown in FIG. 4B, the string assembly 94 may additionally or alternatively include a plurality of substring assemblies 102. Each of the substring assemblies 102 of FIG. 4B includes a battery substring 104, a first substring contactor 106A, a second substring contactor 106B (collectively the substring contactors 106), the first string controller 96, the second string controller 98, and the at least one thermally-sacrificial wire 100. However, in some embodiments, the substring assemblies 102 may include a single substring contactor (e.g., the first substring contactor 106A) and a single string controller (e.g., the first string controller 96). The battery substrings 104 of each of the respective substring assemblies 102 are electrically connectable together to form the respective one of the battery strings 74. For each of the substring assemblies 102, the sacrificial wire(s) 100 extend through the respective battery substring 104, as will be discussed in further detail. The sacrificial wire(s) 100 (e.g., each) form an electrical circuit with the first string controller 96 and/or the second string controller 98 of the respective substring assembly 102.

The first substring contactor 106A and the second substring contactor 106B are configured to facilitate selective control of electrical current flow for the respective battery substring 104. Similar to the contactors 86, 88, the substring contactors 106 are selectively configurable (e.g., switchable) in and between a closed state or an open state to conduct or interrupt an electrical current flow, respectively. The first substring contactor 106A is electrically connected between the battery substring 104 and the string contactor 88A on the positive string line 80A. The second substring contactor 106B is electrically connected between the battery substring 104 and the string contactor 88B on the negative string line 80B.

For each of the substring assemblies 102, the first string controller 96 is electrically connected with the first substring contactor 106A and the second string controller 98 is electrically connected with the second substring contactor 106B. The first string controller 96 is operable to selectively configure the first substring contactor 106A in its open state or its closed state. The second string controller 98 is operable to selectively configure the second string contactor 88B in its open state or its closed state.

The first string controller 96 and/or the second string controller 98 may be configured as a simple electronic hardware (SEH) controller. As used herein, the term "simple electronic hardware (SEH)" refers to electronic hardware that is fully analyzable and testable. Electronic hardware may be classified as simple electronic hardware (SEH), for example, under Radio Technical Commission for Aeronautics Design Assurance Guidance for Airborne Electronic Hardware (DO-254) and/or European Organisation for Civil Aviation Equipment (EUROCAE) Design Assurance Guidance for Airborne Electronic Hardware ED-80 standards, if a comprehensive combination of deterministic tests and analyses appropriate to the design assurance level (DAL) of the electronic hardware can ensure correct functional performance under all foreseeable operating conditions with no anomalous behavior. Performance testing of simple electronic hardware (SEH) may include methods such as visual inspection, basic input-output testing, or straightforward analysis to conclusively establish that the electronic hardware performs as expected without the need for advanced analytical verification methods such as simulation or other complex analytical processes which may be necessary for complex electronic hardware (CEH). Simple electronic hardware (SEH) may typically lack complex state behavior, such as embedded processors or field-programmable gate arrays (FPGAs) with intricate logic. Simple electronic hardware (SEH) may include electronic hardware such as, but not limited to, discrete logic circuits (e.g., simple logic gates which perform only straightforward, predictable functions which can be easily analyzed and tested), signal conditioners (e.g., electronic hardware which prepares or conditions signals without modifying their fundamental characteristics), power regulators or simple power distribution circuits, basic analog circuits (e.g., operational amplifiers with a clear input-output relationship), relays and switches (e.g., mechanical or solid-state relays that control the on/off state of electrical circuits), basic communication interfaces facilitating limited data transmission (e.g., universal asynchronous receiver-transmitters (UARTs) with no advanced protocol handling), and the like. The first string controller 96 and/or the second string controller 98 may alternatively be configured as a complex electronic hardware (CEH) controller. Complex electronic hardware may be understood as any electronic hardware item that cannot be classified as simple electronic hardware, for example, because it may include hardware features which cannot be exhaustively verified to ensure correct behavior under all computable operating conditions.

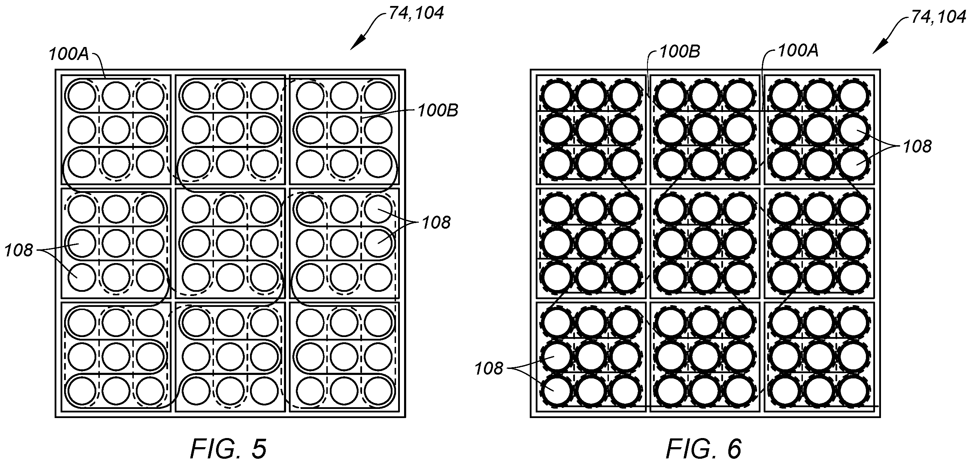

FIGS. 5 and 6 schematically illustrate the sacrificial wires 100 installed in a portion of the battery 64. In particular, FIGS. 5 and 6 schematically illustrate a first sacrificial wire 100A (illustrated as a solid line in FIGS. 5 and 6) and a second sacrificial wire 100B (illustrated as a broken line in FIGS. 5 and 6). The battery 64 includes a plurality of battery cells 108 electrically connected together in series and/or parallel to form the battery strings 74. The battery cells 108 may be arranged as a plurality of interconnected battery modules with each battery module including a subset of the battery cells 108 electrically connected together as a discrete battery unit. Similarly, the battery cells 108 and/or interconnected battery modules may be arranged to form the battery substrings 104 of a respective one of the battery strings 74. The battery cells 108 may be understood to as a smallest discrete unit of the battery 64 configured to convert chemical energy to electrical energy and vice versa (e.g., each of the battery cells 108 may include a cathode, an anode, and an electrolyte). The battery cells 108 may be configured as cylindrical cells, pouch cells, prismatic cells, and the like, and the present disclosure is not limited to any particular configuration of the battery cells 108. The battery 64 (e.g., and its battery cells 108) is configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

The sacrificial wires 100A, 100B of FIG. 5 are wound through the respective battery string 74 or battery substring 104 and disposed at (e.g., on, adjacent, or proximate) each of the battery cells 108 forming the respective battery string 74 or battery substring 104. The sacrificial wires 100A, 100B of FIG. 5 are each disposed at (e.g., on, adjacent, or proximate) a portion of each of the battery cells 108, for example, along a portion of a perimeter (e.g., circumferential perimeter) of each of the battery cells 108. The sacrificial wires 100A, 100B of FIGS. 5 contact each of the battery cells 108; however, the sacrificial wires 100A, 100B may alternatively be disposed in close proximity to each of the battery cells 108 such that the sacrificial wires 100A, 100B are exposed to the substantial part of the thermal output of each of the battery cells 108. The sacrificial wires 100A, 100B are wound through the respective battery string 74 or battery substring 104 in different winding directions such that the sacrificial wires 100A, 100B are each disposed at (e.g., on, adjacent, or proximate) different portions (e.g., different circumferential perimeter portions) of each of the battery cells 108.

The sacrificial wires 100A, 100B of FIG. 6 are wound through the respective battery string 74 or battery substring 104 and disposed at (e.g., on, adjacent, or proximate) each of the battery cells 108 forming the respective battery string 74 or battery substring 104. The sacrificial wires 100A, 100B of FIG. 6 are each disposed at (e.g., on, adjacent, or proximate) and circumscribing each of the battery cells 108, for example, along the full perimeter (e.g., circumferential perimeter) of each of the battery cells 108. The sacrificial wires 100A, 100B of FIGS. 6 contact each of the battery cells 108; however, the sacrificial wires 100A, 100B may alternatively be disposed in close proximity to each of the battery cells 108 such that the sacrificial wires 100A, 100B are exposed to the substantial part of the thermal output of each of the battery cells 108.

Each of the sacrificial wires 100 includes an electrically-conductive sacrificial material. The sacrificial material may include a metal or metal alloy having a selected melting point corresponding to an overtemperature condition of the battery cells 108. For example, the sacrificial material may have a eutectic or near-eutectic metal or metal alloy composition suitable for facilitating a predictable thermal response of the sacrificial wires 100 to the thermal output of the battery cells 108. Examples of these metals or metal alloys include, but are not limited to, tin-lead alloys, bismuth-lead-tin-cadmium alloys, bismuth-tin alloys, indium-based alloys, and pure tin. Compositions of the sacrificial material may be selected to facilitate melting of the sacrificial wires 100 at a selected melting point suitable for identifying an overtemperature condition of the battery cells 108 of the battery 64.

Battery cells, and particularly those having a lithium-ion chemistry, may be susceptible in some rare cases to thermal runaway, wherein the battery cell enters an uncontrollable self-heating state. Of course, temperature monitoring and control of battery cells may also be important for cell configurations and chemistries other than lithium-ion cells. Accordingly, monitoring the cell temperatures of the battery cells 108 may be useful for identifying battery cell 108 overtemperature conditions, and thereby preventing or reducing the severity of thermal runaway events.

The sacrificial wires 100 each form an electrical circuit with the first string controller 96 and/or the second string controller 98 of the respective battery string 74 or battery substring 104, as discussed above. In operation, each of the string controllers 96, 98 is configured to detect a closed circuit condition or an open circuit condition of the electrical circuit formed by each of the sacrificial wires 100. In the event of an overtemperature condition of one or more of the battery cells 108 sufficient to melt or otherwise render the electrically-conductive sacrificial material of the sacrificial wires 100 substantially unable to conduct electrical power, the first string controller 96 and/or the second string controller 98 may detect the open circuit condition. In response to detecting the open circuit condition, the string controllers 96, 98 control the respective string contactors 88 or substring contactors 106 to their open state to electrically isolate the battery string 74 or battery substring 104 including the overtemperature battery cells. The configuration of the string controllers 96, 98 and the sacrificial wires 100 of FIGS. 4-6 facilitates redundant thermal monitoring and protection for the battery 64 without the need to change the battery cells 108 themselves, for example, by installing a temperature sensor (e.g., thermocouple) in the battery cells 108.

The first string controller 96 and/or the second string controller 98 may be configured to generate a warning signal (e.g., an audible alarm, a warning light, etc.) for a pilot or other operator of the aircraft 1000. As shown in FIGS. 4A and 4B, for example, each of the string controllers 96, 98 may be connected in signal communication with a cockpit control system 1002 of the aircraft 1000. Upon detecting the open circuit condition, the string controllers 96, 98 may generate and transmit the warning signal to the cockpit control system 1002.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft (1000), the assembly comprising:
a battery (64) including a plurality of battery strings (74) configured to be electrically connected together in parallel at a first main battery line (78A, 78B), each of the plurality of battery strings (74) including a plurality of battery cells (108) electrically connected together, the plurality of battery strings (74) including a first battery string (74);
a first thermally-sacrificial wire (100) disposed at the plurality of battery cells (108);
a first contactor (88, 88A) electrically connected between the first battery string (74) and the first main battery line (78A, 78B), the first contactor (88, 88A) configurable in an open state and a closed state; and
a first string controller (96) forming a first electrical circuit with the first thermally-sacrificial wire (100), the first string controller (96) operable to detect a closed circuit condition of the first electrical circuit and an open circuit condition of the first electrical circuit, the first string controller (96) operably coupled with the first contactor (88, 88A), the first string controller (96) operable to selectively configure the first contactor (88, 88A) in the open state or the closed state, the first string controller (96) further operable to configure the first contactor (88, 88A) in the open state in response to detecting the open circuit condition of the first electrical circuit.

2. The assembly of claim 1, wherein the first battery string (74) includes a plurality of battery substrings (104) electrically connected together to form the first battery string (74), the plurality of battery substrings (104) includes a first battery substring (104), and the first battery substring (104) includes the plurality of battery cells (108).

3. The assembly of claim 1 or 2, wherein the first thermally-sacrificial wire (100) includes an electrically-conductive sacrificial material, and the electrically-conductive sacrificial material is a eutectic metal or metal alloy.

4. The assembly of claim 1, 2 or 3, further comprising a second contactor (88, 88B) and a second string controller (98), the second contactor (88, 88B) electrically connected between the first battery string (74) and a second main battery line (78A, 78B), the second contactor (88, 88B) configurable in the open state and the closed state, the second string controller (98) forming a second electrical circuit with the first thermally-sacrificial wire (100), the second string controller (98) operable to detect a closed circuit condition of the second electrical circuit and an open circuit condition of the second electrical circuit, the second string controller (98) operably coupled with the second contactor (88, 88B), the second string controller (98) operable to selectively configure the second contactor (88, 88B) in the open state or the closed state, the second string controller (98) further operable to configure the second contactor (88, 88B) in the open state in response to detecting the open circuit condition of the second electrical circuit.

5. A thermal protection method for an aircraft (1000) battery (64), the thermal protection method comprising:
forming an electrical circuit with a thermally-sacrificial wire (100) and a string controller (96, 98), the thermally-sacrificial wire (100) disposed at a plurality of battery cells (108) of a battery (64), the battery (64) including a plurality of battery strings (74) including a first battery string (74), the first battery string (74) including the plurality of battery cells (108);
electrically connecting the first battery string (74) to a main battery line (78A, 78B) with a contactor (88) in a closed state, the contactor (88) configurable in the closed state or an open state; and
detecting one of a closed circuit condition or an open circuit condition of the electrical circuit with the string controller (96, 98), the string controller operable to configure the contactor in the open state in response to detecting the open circuit condition.

6. The thermal protection method of claim 5, further comprising configuring the contactor (88) in the open state, with the string controller (96, 98), in response to detecting the open circuit condition.

7. An assembly for an aircraft (1000), the assembly comprising:
a battery (64) including a plurality of battery cells (108) electrically connected together;
a first thermally-sacrificial wire (100) disposed at the plurality of battery cells (108), the first thermally-sacrificial wire (100) including an electrically-conductive sacrificial material, the electrically-conductive sacrificial material being a eutectic metal or metal alloy;
a first contactor (88, 88A) electrically connected between the plurality of battery cells (108) and a main battery line (78A, 78B), the first contactor (88, 88A) configurable in an open state and a closed state; and
a first string controller (96) forming a first electrical circuit with the first thermally-sacrificial wire (100), the first string controller (96) operable to detect a closed circuit condition of the first electrical circuit and an open circuit condition of the first electrical circuit, the first string controller (96) operably coupled with the first contactor (88, 88A), the first string controller (96) operable to selectively configure the first contactor (88, 88A) in the open state or the closed state, the first string controller (96) further operable to configure the first contactor (88, 88A) in the open state in response to detecting the open circuit condition of the first electrical circuit.

8. The assembly of any of claims 1-3 or 7, further comprising a second thermally-sacrificial wire (100) disposed at the plurality of battery cells (108), the first string controller (96) forming a second electrical circuit with the second thermally-sacrificial wire (100), the first string controller (96) operable to detect a closed circuit condition of the second electrical circuit and an open circuit condition of the second electrical circuit, the first string controller (96) operable to selectively configure the first contactor (88, 88A) in the open state or the closed state, the first string controller (96) further operable to configure the first contactor (88, 88A) in the open state in response to detecting the open circuit condition of the second electrical circuit.

9. The assembly of claim 8, wherein each of the first thermally-sacrificial wire (100) and the second thermally-sacrificial wire (100) contacts each of the plurality of battery cells (108).

10. The assembly of any of claims 1-4 or 7-9, wherein the first string controller (96) is a simple electronic hardware (SEH) controller.

11. The assembly of any of claims 1-4 or 7-10, wherein the first thermally-sacrificial wire (100) contacts each of the plurality of battery cells (108).

12. The assembly of any of claims 1-4 or 7-11, wherein each of the plurality of battery cells (108) has a perimeter, and the first thermally-sacrificial wire (100) contacts a portion of the perimeter.

13. The assembly of any of claims 1-4 or 7-12, wherein each of the plurality of battery cells (108) has a or the perimeter, and the first thermally-sacrificial wire (100) is wound about the perimeter.

14. The assembly of any of claims 1-4 or 7-13, further comprising a cockpit control system (1002) connected in signal communication with the first string controller (96), the first string controller (96) configured to generate and transmit a warning signal to the cockpit control system (1002) in response to the detecting the open circuit condition.

15. The assembly of any of claims 1-4 or 7-14, further comprising a propulsor (26), an electric motor (62), and an electrical distribution system (66), the electric motor (62) is coupled with the propulsor (26), and the electrical distribution system (66) is configured to electrically interconnect the electric motor (62) with the battery (64).
